# EUROPÄISCHE PATENTANMELDUNG

(11) **EP 2 275 580 A1**
(43) Veröffentlichungstag der Anmeldung: **19.01.2011**
(21) Anmeldenummer: 09164681.0
(22) Anmeldetag: 06.07.2009
(51) Int. Cl.: C21C 7/064, C21B 3/06, C21C 7/00

(54) **Verfahren und Mittel zur Behandlung von Roheisenentschwefelungsschlacken**

(71) Anmelder: SKW Stahl-Metallurgie GmbH, 84579 Unterneukirchen (DE)
(72) Erfinder: Lischka, Helmut, 83308 Trostberg (DE)
(74) Vertreter: Dey, Michael

(57) **Zusammenfassung**

Die Erfindung betrifft ein Mittel und ein Verfahren zur Behandlung von Roheisenentschwefelungsschlacken.

## Beschreibung

Die Erfindung betrifft ein Mittel und ein Verfahren zur Behandlung von Roheisenentschwefelungsschlacken.

Im Prozess der Roheisenentschwefelung sind metallurgische Einblasbehandlungsverfahren seit vielen Jahren etablierter Stand der Technik und in zahlreichen Dokumenten ausführlich beschrieben.

Bei der Roheisenentschwefelung werden Eisenschmelzen mit Entschwefelungsmitteln versetzt. Die Eisenschmelze ist dabei mit Schlacke bedeckt. Im Entschwefelungsprozess wird durch die Entschwefelungsmittel Schwefel aus der Metallschmelze in die sich oben auf der Schmelze befindliche Schlacke befördert. Bei herkömmlichen Entschwefelungsprozessen gelangt dabei allerdings unerwünscht auch ein Teil des Eisens in die Schlacke.

Neben dem Hauptaspekt der Reduktion des Schwefelgehaltes im Roheisen spielt für die Effizienz bei der Roheisenentschwefelung die Beschaffenheit der Roheisenentschwefelungsschlacke als Reaktionsprodukt eine wesentliche Rolle. In der Schlacke werden nach der chemischen Reaktion mit den Entschwefelungsmitteln die sulfidischen Reaktionsprodukte aufgenommen und abgebunden. Für die Wirksamkeit des Entschwefelungsprozesses ist es wichtig, dass die schwefelhaltige Schlacke vom Eisen abgetrennt wird, da sonst der darin gebundene Schwefel im nachfogenden Behandlungschritt der Stahlherstellung im Sauerstoffaufblaskonverter wieder zurück in die Metallphase überführt wird.

Eine solche abgezogene Roheisenschlacke enthält jedoch erhebliche Anteile an metallischen Eisenkomponenten, die als Prozessverluste ganz erheblich die Kosten des Verfahrens beeinflussen können. Gefunden werden Eisengranalien und größere Agglomerate. Die Eisengranalien sind verfahrensbedingt. Der Prozess des Einblasens von Entschwefelungsmitteln mit Hilfe einer feuerfesten Lanze in das Metallbad, das mit einem Anteil von Schlacke bedeckt ist, stellt ein typisches Emulsionsverfahren dar. Schlacke und Metall sind nicht mischbare Stoffe, die in diesem Verfahren intensivst durchmischt werden. Dabei entsteht eine typische Emulsion von Eisengranlien in der Schlacke. Der in der Schlacke festgehaltenen Anteil an Eisengranalien wird im wesentlichen bestimmt von den Oberflächenkräften an der Phasengrenzfläche Eisengranalie zur Schlacke. Bestimmend sind dabei die Temperatur von Eisen und Schlacke, die Zusammensetzung der Schlacke, Viskosität der Schlacke und die Benetzbarkeit der Eisengranalien in der Schlacke.

Vor Entfernung der Schlacke wäre es deshalb günstig, die darin enthaltenen Eisenbestandteile wieder der Metallschmelze zuzuführen.

Es hat nicht gefehlt an Vorschlägen zur Lösung dieser Problematik.

DE 28 35 872 beschreibt ein Entschwefelungsmittel auf Basis von Calciumcarbid und gasabspaltenden Komponenten, dem 2 - 10 Gew.-% Flussspat zugesetzt sind. Dadurch wird die Handhabbarkeit der Roheisenentschwefelungsschlacken positiv beeinflusst.

EP 0 530 552 beschreibt beispielhaft den aktuellen Entwicklungsstand bei der Roheisenentschwefelung mit seinen unterschiedlichen Ausbildungsformen der Blas-Prozessgestalltung. Zur Modifikation der Entschwefelungsschlacke wird eine separate Einblassequenz mit dem Flussmittel Soda vorgeschlagen.

EP 0 745 143 schlägt vor einem Entschwefelungsmittel eine Asche aus Biomassenfeuerungen zuzusetzten, um die Trennbarkeit der Roheisenentschwefelungsschlacke vom Eisenbad positiv zu beeinflussen. EP 0 164 592 beschreibt einen Zusatz zum Entschwefelungsmittel Calciumcarbid, der die Aufgabe hat, die Konsistenz der Schlacke positiv zu beeinflussen. Beispielhaft wird als Zusatz Kryolith genannt.

Die im Stand der Technik beschriebene Verwendung von flussmittelartigen Schlackenmodifikatoren, die die Viskosität und den Schmelzpunkt der Schlacken senken sollen, zeigt deutliche, unerwünschte Nebenwirkungen. Insbesondere wird der Wirkungsgrad der verwendeten Entschwefelungsmittel durch diese Zusätze verschlechtert. Der Verbrauch steigt und dementsprechend die Prozesskosten. Zudem greifen Flußmittelzusätze die Feuerfest-Auskleidung von Roheisenentschwefelungspfannen an. Der Feuerfestverschleiß nimmt zu. Bei Verwendung von Soda oder Silikatischen-Zusätzen wird eine verstärkte Rückschwefelung aus der Schlacke zurück in den Stahl beobachtet. Dies macht einen Teil des Ergebnisses aus dem Entschwefelungsprozess wieder zunichte und führt ebenfalls zu höheren Kosten.

Eine Aufgabe der vorliegenden Erfindung bestand darin, ein Verfahren und entsprechende Mittel zur Modifikation von Roheisenentschwefelungsschlacken bereitzustellen, welches die Nachteile herkömmlicher Verfahren beseitigt und einen Beitrag zur Steigerung der reaktionsmetallurgischen Effizienz leistet.

Diese Aufgabe wird erfindungsgemäß gelöst durch ein Verfahren zur Behandlung von Schlacken, insbesondere von Roheisenentschwefelungsschlacken, welches dadurch gekennzeichnet ist, dass der Schlacke, insbesondere der Roheisenentschwefelungsschlacke ein exothermes Mittel zugesetzt wird.

Die erfindungsgemäß eingesetzten exothermen Mittel bestehen insbesondere aus einem Brennstoff und einer Sauerstoff abgebenden Komponente. Durch die Zugabe des exothermen Mittels zur Roheisenentschwefelungsschlacke kann die Temperatur der Schlacke erhöht werden. Auf diese Weise werden in der Schlacke angesammelte Eisenbestandteile und insbesondere Eisenpartikel aus der Schlacke heraus an das Metallbad zurück abgegeben. Durch die erreichte Temperaturerhöhung der Schlacke und die Modifikation der Schlackencharakteristik können somit Eisenverluste bei der Roheisenentschwefelung reduziert werden, insbesondere Eisenverluste, die ansonsten prozessbedingt beim Einblasprozess der Roheisenentschwefelung generiert werden.

Vorzugsweise wird das erfindungsgemäße Verfahren zur Behandlung der Roheisenentschwefelungsschlacken im Rahmen einer Roheisenentschwefelung durchgeführt, also insbesondere an Schlacken, die sich auf einem Metallbad befinden. Es wurde nun erfindungsgemäß festgestellt, dass ein wesentlicher Faktor zur Freisetzung von Eisenpartikeln aus der Schlacke die Temperatur ist. Entsprechend treten Ausbeuteprobleme insbesondere dann auf, wenn kälteres Eisen produziert wird, beispielsweise bei Nichtvollauslastung von Produktionsanlagen. Der bisher im Stand der Technik verfolgte Ansatz, die Viskosität der Schlacke durch Zusatz von Flussmittel zu ändern, führte zwar zu einer Verringerung der Eisenverluste, aber gleichzeitig zu anderen unerwünschten Wirkungen, wie beispielsweise einer schlechteren Entschwefelung. Durch die erfindungsgemäße Vorgehensweise unter Zusatz eines exothermen Mittels, wodurch die Temperatur der Schlacke beeinflusst wird, wird nun der wesentliche Faktor für den Gehalt an Eisenpartikeln in der Schlacke gezielt beeinflusst, ohne dass unerwünschte Wirkungen, wie im Stand der Technik beobachtet, auftreten. Durch die Zugabe des exothermen Mittels wird insbesondere die Temperatur der Schlacke erhöht.

Erfindungsgemäß bevorzugt wird das exotherme Mittel direkt und unmittelbar der Schlacke zugesetzt und nicht dem Metallbad. Dadurch gibt es keinen oder nur einen geringen Kontakt des exothermen Mittels mit der Metall- oder Eisenschmelze. Vielmehr wird konzentriert nur die Schlacke selbst behandelt.

Der Effekt hinsichtlich einer Reduktion der Eisenverluste ist ganz überraschendend und deutlich überlegen gegenüber einer herkömmlichen Zumischung von Flußmitteln in die Entschwefelungsmittel. Besonders in kritischen Situationen, wenn z.B. Eisen und Schlacke kalt sind oder, wenn Eisen und Schlacke hohe Titangehalte aufweisen, zeigt das erfindungsgemäße Verfahren seine Überlegenheit. Es wirkt, während herkömmliche Methoden kaum noch Effekte zeigen.

Überraschenderweise hat sich noch ein weiterer sehr positiv bewerteter Effekt gezeigt. Beim Entleeren der vollen Schlackenkübel gibt es üblicher Weise eine lästige, die Umwelt belastende Flammen-und Rauchentwicklung. Bei Schlacken, die nach dem erfindungsgemäßen Verfahren behandelt wurden, wird eine deutlich reduzierte Flammenentwicklung beim Kippen der Kübel beobachtet.

In einer bevorzugten Ausführungsform wird das exotherme Mittel nach Befüllung der Pfanne mit Roheisen auf die Badoberfläche aufgegeben. Erfindungsgemäß kann das exotherme Mittel insbesondere vor Beginn der Entschwefelungsbehandlung und/oder während der Entschwefelungsbehandlung auf die Metallbadoberfläche, insbesondere Eisenbadoberfläche, auf der sich die Schlacke befindet, aufgegeben werden. Das exotherme Mittel kann mithilfe von herkömmlichen Fördertechniken, beispielsweise mithilfe von pneumatischen oder mechanischen Fördertechniken, der Schlackenoberfiläche zugeführt werden. Bevorzugt wird das exotherme Mittel als Sackware zugegeben.

Grundsätzlich kann erfindungsgemäß jedes exotherme Mittel eingesetzt werden, insbesondere exotherme Mittel, die zu einer Temperaturerhöhung der Schlacke führen. Exotherme Mittel oder Gemische, die auch im erfindungsgemäßen Verfahren eingesetzt werden können, finden bisher beispielsweise Verwendung beim Vergießen von Gusseisen und Stahl in Formen bzw. Kokillen (siehe DD 248973; siehe AT 26554). Exotherme Gemische werden beispielsweise auch beim Thermit-Verfahren nach Goldschmitt eingesetzt, bei dem eine aluminothermische Reaktion zum Schweißen von Schienen verwendet wird.

Als besonders geeignet für das erfindungsgemäße Verfahren zur Behandlung von Roheisenentschwefelungsschlacken ist ein exothermes Mittel, welches wenigstens eine Sauerstoff abgebende Komponente und wenigstens ein oxidierbares Metall umfasst.

Die vorliegende Erfindung betrifft deshalb auch ein exothermes Mittel, umfassend ein oxidierbares Metall und eine Sauerstoff abgebende Komponente.

Besonders bevorzugt beträgt der Anteil an oxidierbarem Metall im exothermen Mittel 2 bis 50 Masse-%, bevorzugt 5 bis 20 Masse-%. Das oxidierbare Metall, bei dem es sich um ein Reinelement oder um eine Legierung handeln kann, wird bevorzugt ausgewählt aus der Gruppe Al, Mg, FeSi und CaSi. Weiterhin wurde erfindungsgemäß festgestellt, dass besonders günstige Ergebnisse erzielt werden können, wenn die Korngrößen der oxidierbaren Metalle des exothermen Mittels, bezogen auf den Durchmesser, im Bereich von < 1 mm, insbesondere 0,01 bis 0,9 mm, mehr bevorzugt von 0,05 bis 0,5 mm liegen.

Das erfindungsgemäße exotherme Mittel enthält weiterhin eine Sauerstoff abgebende Komponente. Der Massenanteil der Sauerstoff abgebenden Komponente liegt vorzugsweise bei 30 bis 70 %, mehr bevorzugt bei 50 bis 65 %. Als Sauerstoff abgebende Komponente wird vorzugsweise ein Metalloxid, insbesondere Eisenoxid und vorzugsweise Magnetit, Walzzunder oder Hammerschlag verwendet. Weiterhin bevorzugt kann ein Carbonat, z.B. Soda, eingesetzt werden. Die Korngröße der verwendeten Sauerstoff abgebenden Komponente, bezogen auf den Durchmesser, beträgt vorzugsweise < 0,5 mm, insbesondere 0,01 bis 0,4 mm und besonders bevorzugt 0,05 bis 0,25 mm.

Neben den essenziellen Bestandteilen oxidierbares Metall und Sauerstoff abgebende Komponente kann das erfindungsgemäße exotherme Mittel weitere Komponenten enthalten. So kann das exotherme Mittel optional ein Flussmittel, und insbesondere 5 bis 30 Masse-%, bevorzugt 20 bis 30 Masse-% Flussmittel enthalten. Geeignete Flussmittel sind beispielsweise Flussspat, Soda oder Kryolith. Die Körnung des Flussmittels liegt bevorzugt im Bereich von < 0,5 mm, insbesondere im Bereich von 0,01 bis 0,4 mm und mehr bevorzugt im Bereich von 0,05 bis 0,25 mm.

Die einzelnen Komponenten des exothermen Mittels können als Gemisch oder separiert als Einzelkomponenten vorliegen und eingesetzt werden.

In einer bevorzugten Ausführungsform enthält das exotherme Mittel Aluminium als oxidierbares Material, Eisenoxid als Sauerstoff abgebende Komponente und optional Soda als Flussmittel.

### Beispiel

Folgendes experimentelles Ausführungsbeispiel soll den erfindungsgemäßen Fortschritt in der Modifikation von Roheisenentschwefelungsschlacken aufzeigen.

Auf einer dem Stand der Technik entsprechenden injektionsmetallurgischen Einblasanlage wurden Entschwefelungsbehandlungen mit und ohne erfindungsgemäßem exothermen Zusatz durchgeführt. Die Roheisentemperatur betrug im Mittelwertwert 1325 °C. Der Anteil mitgeschleppter Hochofenschlacke lag im Versuchszeitraum relativ konstant bei 10 kg/t Roheisen. Die Titangehalte im Eisen lagen relativ hoch bei 700 - 900 ppm. Vor Beginn der Einblasbehandlung im Entschwefelungsstand wurde das exotherme Zusatzmittel sackweise nach Abschluss der Befüllung der Roheisenentschwefelungspfanne in der Umfüllgrube zugegeben. Die Zugabemenge betrug einheitlich 100 kg. Bei den Behandlungen ohne erfindungsgemäßen Zusatz wurden nach der Entschwefelungsbehandlung im Abschlackstand im Mittel 23 kg/t Roheisen von der Schmelze abgezogen. Mit dem erfindungsgemäßen Zusatz konnte dieser Wert auf 15 kg/t reduziert werden. Die Differenz besteht hauptsächlich aus verringerten Eisenanteilen in der Schlacke. Dies war auch daraus ersichtlich, dass die behandelte Schlacke wesentlich leichter auf dem Eisenbad schwamm und sich leichter entfernen ließ.

## Patentansprüche

1. Verfahren zur Behandlung von Schlacken, insbesondere von Roheisenentschwefelungsschlacken, **dadurch gekennzeichnet, dass** der Schlacke ein exothermes Mittel zugesetzt wird.

2. Verfahren nach Anspruch 1, **dadurch gekennzeichnet, dass** das exotherme Mittel bei der Roheisenentschwefelung auf die sich auf der Metallbadoberfläche befindliche Schlacke aufgegeben wird.

3. Verfahren nach einem der Ansprüche 1 oder 2, **dadurch gekennzeichnet, dass** das exotherme Mittel vor Beginn einer Entschwefelungsbehandlung auf die sich auf der Metallbadoberfläche befindliche Schlacke aufgegeben wird.

4. Verfahren nach einem der Ansprüche 1 bis 3, **dadurch gekennzeichnet, dass** das exotherme Mittel während der Entschwefelungsbehandlung auf die sich auf der Metallbadoberfläche befindliche Schlacke aufgegeben wird.

5. Exothermes Mittel, umfassend
(i) ein oxidierbares Metall und
(ii) eine Sauerstoff abgebende Komponente.

6. Exothermes Mittel nach Anspruch 5, **dadurch gekennzeichnet, dass** der Anteil an oxidierbarem Metall 2 bis 50 Masse-% beträgt.

7. Exothermes Mittel nach einem der Ansprüche 5 oder 6, **dadurch gekennzeichnet, dass** das oxidierbare Metall ausgewählt ist aus der Gruppe Al, Mg, FeSi und CaSi.

8. Exothermes Mittel nach einem der Ansprüche 5 bis 7, **dadurch gekennzeichnet, dass** die Korngröße des oxidierbaren Metalls, bezogen auf den Durchmesser, kleiner 1 mm beträgt.

9. Exothermes Mittel nach einem der Ansprüche 5 bis 8, **dadurch gekennzeichnet, dass** der Anteil an Sauerstoff abgebender Komponente 30 bis 70 Masse-% beträgt.

10. Exothermes Mittel nach einem der Ansprüche 5 bis 9, **dadurch gekennzeichnet, dass** als Sauerstoff abgebende Komponente ein Metalloxid oder ein Metallcarbonat eingesetzt wird.

11. Exothermes Mittel nach einem der Ansprüche 5 bis 10, **dadurch gekennzeichnet, dass** die Korngröße der Sauerstoff abgebenden Komponente, bezogen auf den Durchmesser, kleiner 0,5 mm beträgt.

12. Exothermes Mittel nach einem der Ansprüche 5 bis 11, **dadurch gekennzeichnet, dass** sie weiterhin umfasst
(iii) ein Flussmittel.

13. Exothermes Mittel nach einem der Ansprüche 5 bis 12, **dadurch gekennzeichnet, dass** der Anteil an Flussmittel 5 bis 30 Masse-% beträgt.

14. Exothermes Mittel nach einem der Ansprüche 5 bis 13, **dadurch gekennzeichnet, dass** es sich um eine Mischung der Komponenten (i) und (ii) und gegebenenfalls (iii) handelt.

15. Exothermes Mittel nach einem der Ansprüche 5 bis 13, **dadurch gekennzeichnet, dass** die Komponenten (i), (ii) und gegebenenfalls (iii) separat vorliegen.
